# EUROPEAN PATENT APPLICATION

(11) **EP 2 317 373 A2**
(43) Date of publication of application: **04.05.2011**
(21) Application number: 10187930.2
(22) Date of filing: 18.10.2010
(51) Int. Cl.: G02F 1/13357

(54) **Backlight unit, display apparatus including the same and control method thereof**

(30) Priority: 19.10.2009 KR 20090099239
(71) Applicant: Samsung Electronics Co., Ltd., Suwon-si, Gyeonggi-do 442-742 (KR)
(72) Inventor: Kim, Sung-soo, Suwon-si Gyeonggi-do (KR); Lee, Yong-jai, Suwon-si Gyeonggi-do (KR)
(74) Representative: Land, Addick Adrianus Gosling

(57) **Abstract**

A backlight unit, a display apparatus including the same, and a control method thereof for providing local dimming of a display panel are provided. The display apparatus includes a display panel; a plurality of light source modules (140,150); a light guiding unit (110) adapted so that the incident light from the plurality of light source modules is emitted to different areas of the display panel, respectively, wherein the plurality of light source modules are provided at a lateral side of the light guiding unit; a driver (240) which drives the plurality of light source modules; and a controller (250) to control the driver so that the incident light from the plurality of light source modules is emitted to the different areas of the display panel.

## Description

Apparatuses and methods consistent with the exemplary embodiments relate to a backlight unit, a display apparatus including the same, and a control method thereof, and more particularly, to a backlight unit capable of performing local dimming with an edge-type light source, a display apparatus including the same, and a control method thereof.

Methods for lighting a display apparatus are broadly classified into a direct type and an edge type according to positions of a light source.

In the case of the direct type, the light source is placed at a back of a liquid crystal display (LCD) panel and emits light to the LCD panel. In the direct type, the light source can be placed throughout the LCD panel, so that uniform brightness can be guaranteed and local dimming can be performed. However, it is difficult to make the display apparatus thin because the light source is placed at the back of the LCD panel.

In the case of the edge type, the light source is placed at lateral sides of a light guiding plate provided at the back of the LCD panel, and emits light to the LCD panel by reflection through the light guiding plate.

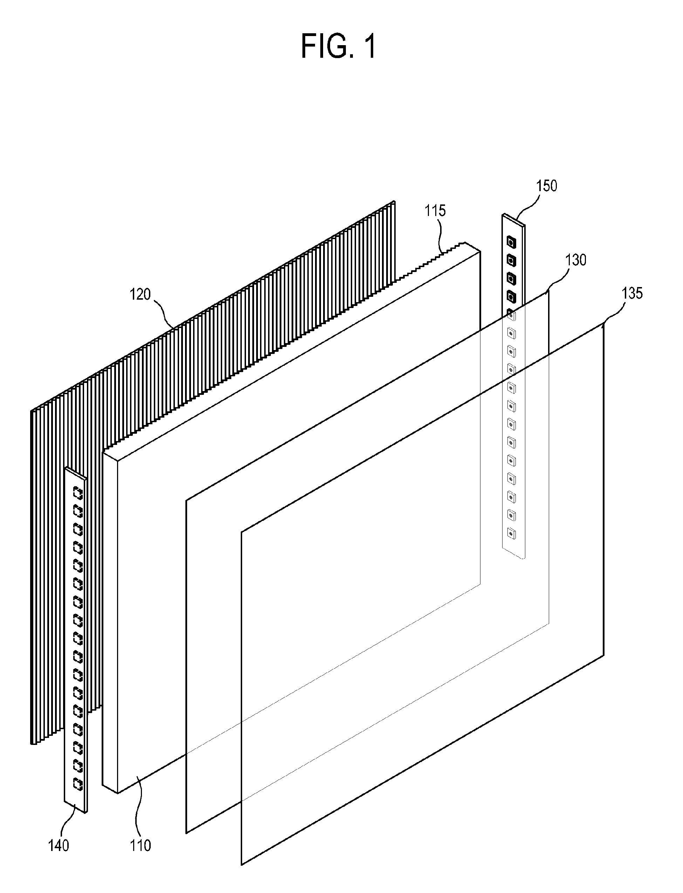

FIG. 1 is an exploded perspective view of a related art edge-type backlight unit.

As shown in FIG. 1, incident light from light emitting diode (LED) sources 140 and 150 placed at lateral sides of a light guiding plate 110 travels through an inside of the light guiding plate 110 while being diffused. Here, the incident light may travel through the inside of the light guiding plate 110 by total reflection.

The light guiding plate 110 is formed with a reflective pattern 115 on a surface thereof opposite to a surface facing an LCD panel (not shown). Thus, the light that travels through the inside of the light guiding plate 110 by total reflection is diffusively reflected by the reflective pattern 115 and emerges from a front of the light guiding plate 110.

The surface of the light guiding plate 110 formed with the reflective pattern 115 is provided with a reflective sheet 120 that reflectively returns the light leaking from the light guiding plate 110 toward the light guiding plate 110 to prevent light loss. Further, the surface of the light guiding plate 110 facing the LCD panel (not shown) is provided with a diffusion sheet 130 to diffuse and scatter light emerged from the light guiding plate 110, and a prism sheet 135 to collect light scattered in vertical and horizontal directions by the diffusion sheet 130.

Thus, in the case of the edge type, the light source is positioned at the lateral sides of the light guiding plate, so that the display apparatus can have a thin structure. However, such a position of the light source makes it difficult to perform local dimming for controlling the brightness of partial areas of the LCD panel.

Exemplary embodiments provide a backlight unit capable of performing local dimming with an edge-type light emitting diode (LED), a display apparatus including the same, and a control method thereof.

According to an aspect of an exemplary embodiment, there is provided a display apparatus including: a display panel; a plurality of light source modules; a light guiding unit configured so that incident light from the plurality of light source modules is emitted to different areas of the display panel, respectively, wherein the plurality of light source modules are disposed at a lateral side of the light guiding unit; a driver which drives the plurality of light source modules; and a controller to control the driver so that the incident light from the plurality of light source modules is emitted to the different areas of the display panel.

The light guiding unit may include a first reflective pattern corresponding to a first incident path of the incident light and a second reflective pattern corresponding to a second incident path different from the first incident path, and the first reflective pattern and the second reflective pattern may be provided on different planes from each other.

The plurality of light source modules may include a first light source module corresponding to the first reflective pattern, and a second light source module corresponding to the second reflective pattern.

The first light source module and the second light source module may be arranged in two rows at the lateral side of the light guiding unit corresponding to positions of the first reflective pattern and the second reflective pattern.

At least one of the first reflective pattern and the second reflective pattern may be provided internally within the light guiding unit.

The light guiding unit may include a first light guiding plate including the first reflective pattern, and a second light guiding plate including the second reflective pattern.

The display apparatus may further include an intercepting layer preventing light from passing between the first light guiding plate and the second light guiding plate.

The first reflective pattern and the second reflective pattern may be arranged not to overlap with each other in a longitudinal direction of the display panel.

Exemplary embodiments also provide a backlight unit of a display apparatus including a display panel, the backlight unit including: a plurality of light source modules; a light guiding unit configured so that incident light from the plurality of light source modules is emitted to different areas of the display panel, wherein the plurality of light source modules are disposed at a lateral side of the light guiding unit. According to another aspect of an exemplary embodiment, the light guiding unit includes a first reflective pattern corresponding to a first incident path of the incident light, and a second reflective pattern corresponding to a second incident path different from the first incident path, and the first reflective pattern and the second reflective pattern are provided on different planes from each other.

The plurality of light source modules may include a first light source module corresponding to the first reflective pattern, and a second light source module corresponding to the second reflective pattern, and the first light source module and the second light source module may be arranged in parallel to respective lateral sides of the light guiding unit, corresponding to positions of the first reflective pattern and the second reflective pattern.

In one exemplary embodiment, the plurality of light source modules comprises a plurality of LED modules.

In another exemplary embodiment, the display panel comprises an LCD display.

At least one of the first reflective pattern and the second reflective pattern may be provided internally within the light guiding unit.

The light guiding unit may include a first light guiding plate including the first reflective pattern, and a second light guiding plate including the second reflective pattern.

The backlight unit may further include an intercepting layer preventing light from passing between the first light guiding plate and the second light guiding plate.

Still another exemplary embodiment provides a method of controlling a display apparatus with a liquid crystal display (LCD) panel, the method including: receiving a video signal, and controlling a plurality of light emitting diode (LED) modules provided in lateral side of a light guiding unit, based on the received video signal so that incident light from the plurality of LED modules is emitted to different areas of the LCD panel via a reflective pattern formed corresponding to an incident path of the incident light.

The controlling may include controlling the plurality of light source modules to emit different amounts of light according to the areas of the LCD panel.

The above and/or other aspects will become apparent and more readily appreciated from the following description of the exemplary embodiments, taken in conjunction with the accompanying drawings, in which:
FIG. 1 is an exploded perspective view of a conventional edge-type backlight unit;
FIG. 2 is a block diagram of a display apparatus according to an exemplary embodiment;
FIGs. 3A to 3C show various forms of a light guiding unit according to an exemplary embodiment;
FIG. 4A is an exploded perspective view of a light guiding unit according to another exemplary embodiment;
FIG. 4B is a plan view of a first light guiding plate and a second light guiding plate shown in FIG. 4A;
FIG. 5A is an exploded perspective view of a light guiding unit according to still another exemplary embodiment;
FIG. 5B is a plan view of a first light guiding plate and a second light guiding plate shown in FIG. 5A;
FIG. 6 shows the display apparatus according to an exemplary embodiment as embodied in a digital television (TV);
FIG. 7A shows local dimming performed for each line of an LCD panel;
FIG. 7B shows local dimming performed for each block by the light guiding unit according to an exemplary;
FIG. 8 is a flowchart of controlling a backlight unit according to an exemplary embodiment; and
FIGs. 9A to 9C show schematic configurations of the display apparatus according to an exemplary embodiment.

Below, exemplary embodiments will be described in detail with reference to accompanying drawings so as to be readily understood by a person of ordinary skill in the art. The inventive concept may be embodied in various forms without being limited to the exemplary embodiments set forth herein. Descriptions of well-known parts are omitted for clarity, and like reference numerals refer to like elements throughout.

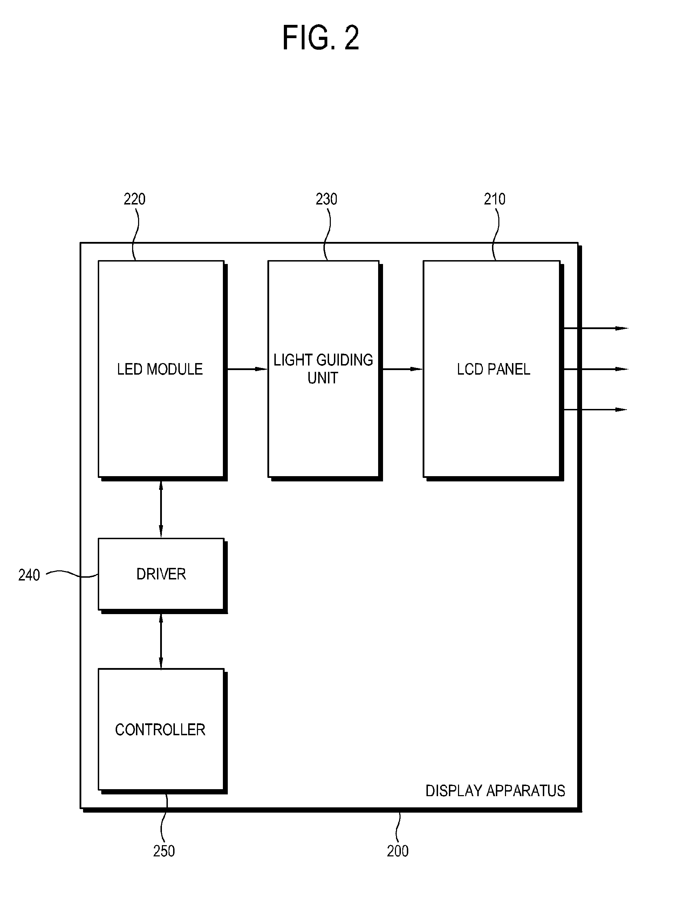

FIG. 2 is a block diagram of a display apparatus according to an exemplary embodiment.

A display apparatus 200 in this exemplary embodiment may be achieved by a television (TV), a monitor, a large format display (LFD), a laptop personal computer (PC), or other display panels known to those skilled in the art. Any display apparatus having an edge-type light source can be used as the display apparatus 200 in this embodiment.

In this exemplary embodiment, the display apparatus 200 includes an LCD panel 210, a plurality of LED modules 220, the light guiding unit 230, a driver 240 and a controller 250.

The LCD panel 210 displays an image thereon. The LCD panel 210 is not a self-emissive display device and thus needs a light source.

The display apparatus 200 may perform local dimming to display an image on the LCD panel 210. According to the local dimming in this exemplary embodiment, the plurality of LED modules 220 may be driven to make a plurality of areas on the LCD panel 210 differ in brightness.

The plurality of LED modules 220 may be provided at outer side edges, e.g. lateral sides, of the light guiding unit 230 provided at a back of the LCD panel 210. The plurality of LED modules 220 may be provided corresponding to respective areas on the LCD panel 210 for the local dimming. The plurality of LED modules 220 may emit light to the light guiding unit 230 in different paths from one another so that the light can be emitted to the corresponding areas on the LCD panel 210, respectively. According to an exemplary embodiment, the plurality of LED modules 220 may be arranged in plural rows at the lateral sides of the light guiding unit 230 corresponding to respective positions where reflective patterns are formed. For example, a first LED module and a second LED module may be arranged in two rows at the lateral sides of the light guiding unit 230 corresponding to the positions where a first reflective pattern and a second reflective pattern are formed.

In each LED module 220, at least one LED may be arrayed.

The light guiding unit 230 converts light from a point light source of the plurality of LED modules 220 into light of a surface light source. The light guiding unit 230 may be made of acryl resin such as polymethylmethacrylate (PMMA) or the like.

The light guiding unit 230 may be formed with the reflective patterns corresponding to incident paths of incident light so that light can be emitted from the plurality of LED modules 220 to corresponding different areas on the LCD panel 210, respectively. That is, if the reflective patterns of the light guiding unit 230 in this embodiment are used, the light incident from the plural LED modules 220 along various paths is independently emitted to the corresponding different areas on the LCD panel 210, so that the local dimming can be minutely performed by properly driving the plurality of LED modules 220.

The driver 240 can drive the plurality of LED modules 220 on the basis of a control signal from the controller 250, so that the light can be emitted to the different areas of the LCD panel 210 through the light guiding unit 230. That is, the LED module 220 corresponding to a certain area of the LCD panel 210 among the plurality of LED modules 220 is selectively driven to perform the local dimming with regard to the different areas of the LCD panel 210.

The controller 250 may control the driver 240 to emit light to specific areas of the LCD panel 210. Also, the controller 250 may control the driver 240 to emit light with different intensity to specific areas of LCD panel 210.

The local dimming performed in the controller 250 may correspond to an image displayed on the LCD panel 210. For example, the local dimming may be performed such that the brightness of the corresponding area is properly adjusted according to images displayed on the LCD panel 210

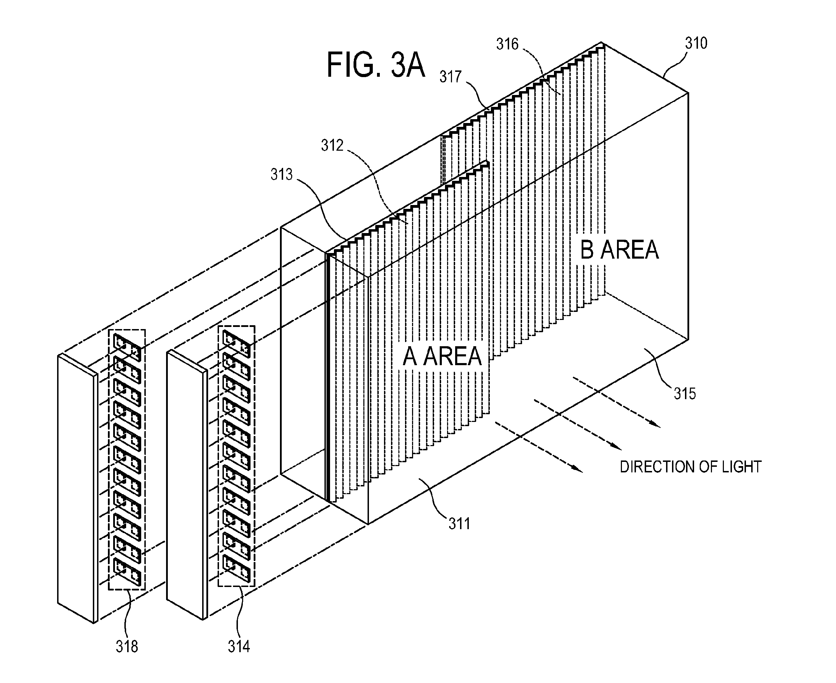

FIGs. 3A to 3C show various forms of a light guiding unit according to an exemplary embodiment. First, as shown in FIG. 3A, a plurality of reflective patterns 312 and 316 are provided at predetermined positions on a light guiding unit 310 so that light can be emitted to corresponding different areas (refer to "A area" 311 and "B area" 315) on the LCD panel 210. In this exemplary embodiment, the plurality of LED modules 314 and 318 are disposed to correspond to the reflective patterns 312 and 316, respectively, of the light guiding unit 310. The plurality of LED modules 314 and 318 are disposed at the lateral sides of the light guiding unit 310 so as to emit light toward the reflective patterns 312 and 316, respectively.

The reflective patterns 312 and 316 are provided corresponding to the path of the incident light from the plurality of LED modules 314 and 318. In more detail, a first reflective pattern 312 and a second reflective pattern 316 are provided on the paths of the incident light from a first LED module 314 and from a second LED module 318, respectively. Here, the light reflected from the first reflective pattern 312 is emitted to the A area 311, and the light reflected from the second reflective pattern 316 is emitted to the B area 315. Thus, the plurality of LED modules 314 and 318 are properly driven, so that light can be selectively emitted to the corresponding different areas, e.g., the A area 311 and the B area 315, thereby performing the local dimming minutely.

As shown in FIG. 3A, the first reflective pattern 312 and the second reflective pattern 316 corresponding to the different areas (e.g., the A area 311 and the B area 315) on the LCD panel 210 may be provided in different planes such that there is no interference between two optical paths of the incident light from a pair of corresponding LED modules 314 and 318. Here, two planes where the first reflective pattern 312 and the second reflective pattern 316 are provided, respectively, may be parallel to the LCD panel 210. Further, the pair of LED modules 314 and 318 may be arranged in two rows on the lateral sides of the light guiding unit 310 corresponding to the positions where the first reflective pattern 312 and the second reflective pattern 316 are formed.

As shown in FIG. 3A, the reflective patterns 312 and 316 are provided with reflective sheets 313 and 317, respectively, thereby returning light leaking from the light guiding unit 310 toward the inside of the light guiding unit 310, i.e., toward the LCD panel 210.

Also, as shown in FIG. 3A, the first reflective pattern 312, according to an exemplary embodiment, may be formed inside the light guiding unit 310.

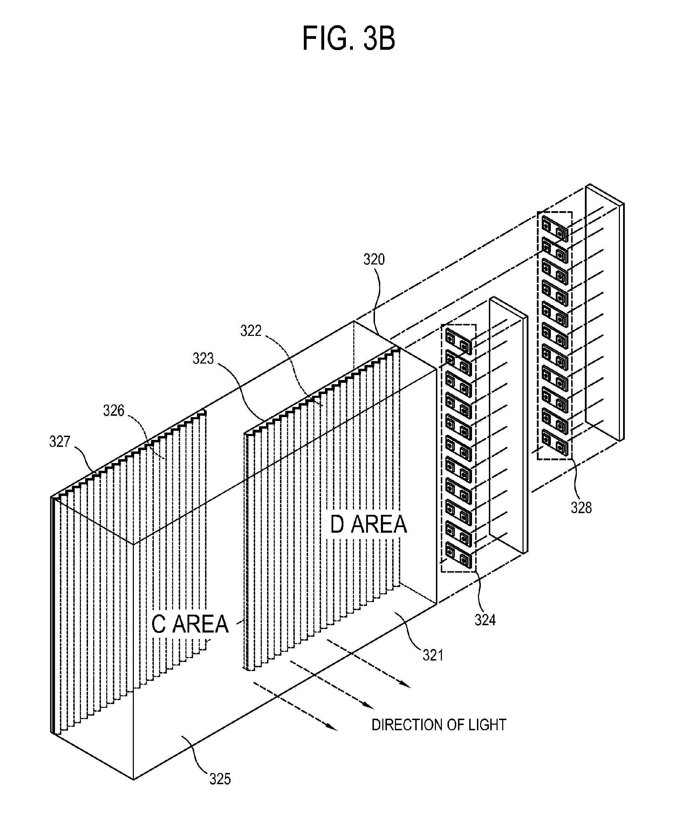

FIG. 3B shows a reflective pattern of a light guiding unit 320 according to another exemplary embodiment. Reflective patterns 322 and 326, and LED modules 324 and 328 shown in FIG. 3B are similar to the reflective patterns 312 and 316, and the LED modules 314 and 318 shown in FIG. 3A except for their positions, and the corresponding different areas (see a D area 321 and a C area 325) on the LCD panel 210. Therefore, repetitive descriptions thereof will be avoided. Also, the reflective patterns 312 and 316 and the LED modules 314 and 318 shown in FIG. 3A and the reflective patters 322 and 326 and the LED modules 324 and 328 may be combined as necessary. The reflective patterns 322 and 326 are also provided with reflective sheets 323 and 327, respectively.

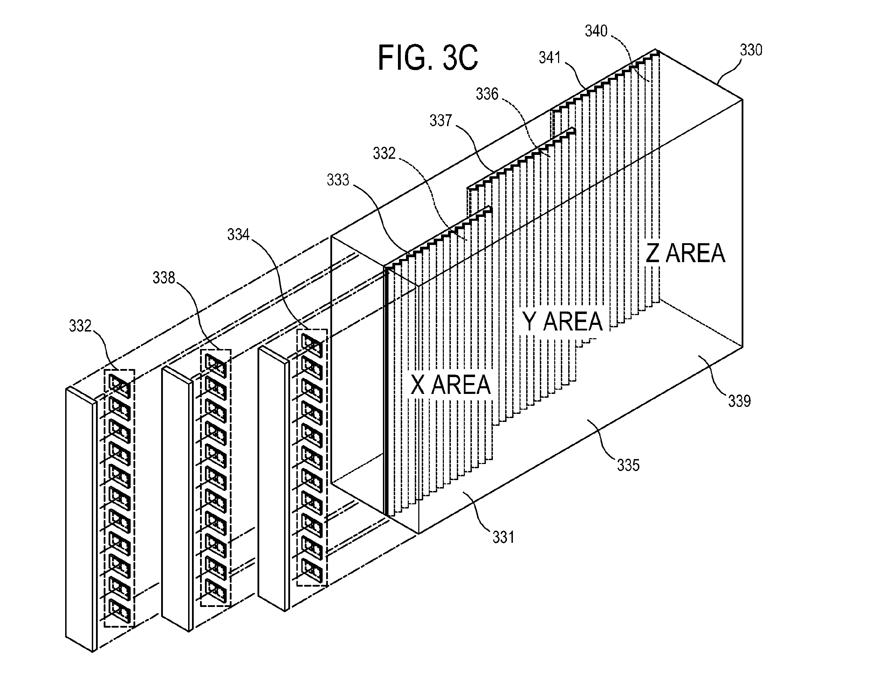

FIG. 3C shows a reflective pattern of a light guiding unit 330 according to still another exemplary embodiment. Reflective patterns 332, 336 and 340, and LED modules 334, 338 and 342 shown in FIG. 3C are similar to the reflective patterns 312 and 316, and LED modules 314 and 318 shown in FIG. 3A except for their number, their positions, and the corresponding different areas (see an X area 331, a Y area 335 and a Z area 339) on the LCD panel 210 Therefore, repetitive descriptions thereof will be avoided. The reflective patterns 332, 336 and 340 are also provided with reflective sheets 333, 337 and 341, respectively.

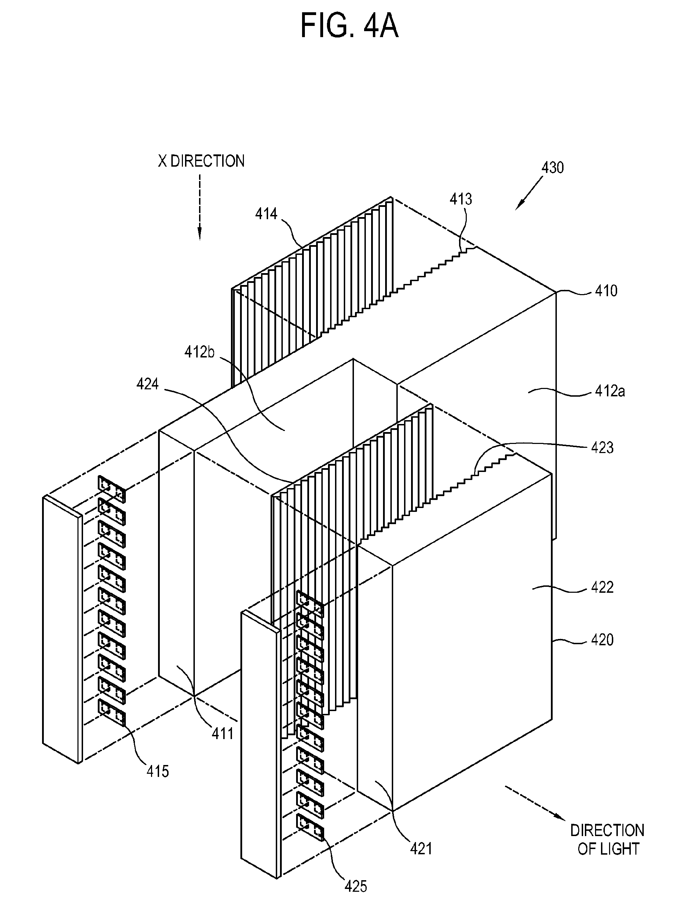

FIG. 4A is an exploded perspective view of a light guiding unit 430 according to another exemplary embodiment. As shown in FIG. 4A, a light guiding unit 430 in this exemplary embodiment includes a first light guiding plate 410 formed with a first reflective pattern 413, and a second light guiding plate 420 formed with a second reflective pattern 423. That is, the light guiding unit 430 in this embodiment is, as shown in FIG. 3A by way of example, configured by coupling the first light guiding plate 410 formed with the first reflective pattern 413 and the second light guiding plate 420 formed with the second reflective pattern 423, on the contrary to the light guiding unit 310 internally provided with the first reflective pattern 312. In FIG. 4A, reference numerals 414 and 424 indicate reflective sheet. Similar to the light guiding unit 310 shown in FIG. 3A, the first reflective pattern 413 and the second reflective pattern 423 shown in FIG. 4A are formed on different planes from each other. Also, LED modules 415 and 425 are arranged corresponding to the reflective patterns 413 and 423.

Specifically, the first light guiding plate 410 may include a first lateral surface 411, a first front surface 412a, and a second front surface 412b. The first LED module 415 corresponding to the first reflective pattern 413 is placed on the first lateral surface 411. The second light guiding plate 420 is coupled to the second front surface 412b, and the first reflective pattern 413 is formed in a part of a rear surface of the first light guiding plate opposite to the first front surface 412a. Incident light from the first LED module 415 is reflected by the first reflective pattern 413 and emerges from the first front surface 412a. As shown in FIG. 4A, the other part of the rear surface of the first light guiding plate 410 opposite to the second front surface 412b is not formed with any reflective pattern, so that no light can emerge from the second front surface 412b.

Reflective patterns 413 and 423 may be formed by at least one of a dot printing method, a V-cutting method, and an injection molding method using a mold. In the dot printing method, dots for reflecting the incident light are printed with special ink on the back of the light guiding plate. In this case, it is possible to increase the quantity of light reflected from the dot by making the size of the dot larger as it becomes more distant from the light source. In the V-cutting method, V-shaped recesses that serve as a reflective body and change a traveling direction of light into a frontward direction are formed on the back of the light guiding plate. In this case, the V-shaped recesses may be decreased in intervals therebetween or increased in depth as it becomes more distant from the light source. In the injection molding method using a mold, a sheet mold formed with a pattern is fastened to an injection molding machine, then heated and pressed to form the light guiding plate. Referring to FIG. 4A, the reflective patterns 413 and 423 formed by the V-cutting method are illustrated by way of example.

To more effectively perform the local dimming, leakage of light toward other blocks may be suppressed. For example, it may be beneficial to suppress light propagating into the second light guiding plate 420 via the second front surface 412b of the first light guiding plate 410. To this end, an intercepting layer (not shown) may be interposed between the first light guiding plate 410 and the second light guiding plate 420 to intercept the light. The intercepting layer may be achieved by a reflective coating structure for reflecting the light, a predetermined structure of intercepting the light, or other structures known to a person of ordinary skill in the art.

The second light guiding plate 420 may include a second lateral surface 421 and a third front surface 422. The second LED module 425 corresponding to the second reflective pattern 423 is placed on the second lateral surface 421. The second reflective pattern 423 is formed in a rear surface of the second light guiding plate 420 opposite to the third front surface 422. As mentioned above, the second light guiding plate 420 may be placed on the second front surface 412b of the first light guiding plate 410. The second light guiding plate 420 may reflect the incident light at the second lateral surface 421 toward the reflective pattern 423 so that the light emerges from the third front surface 422.

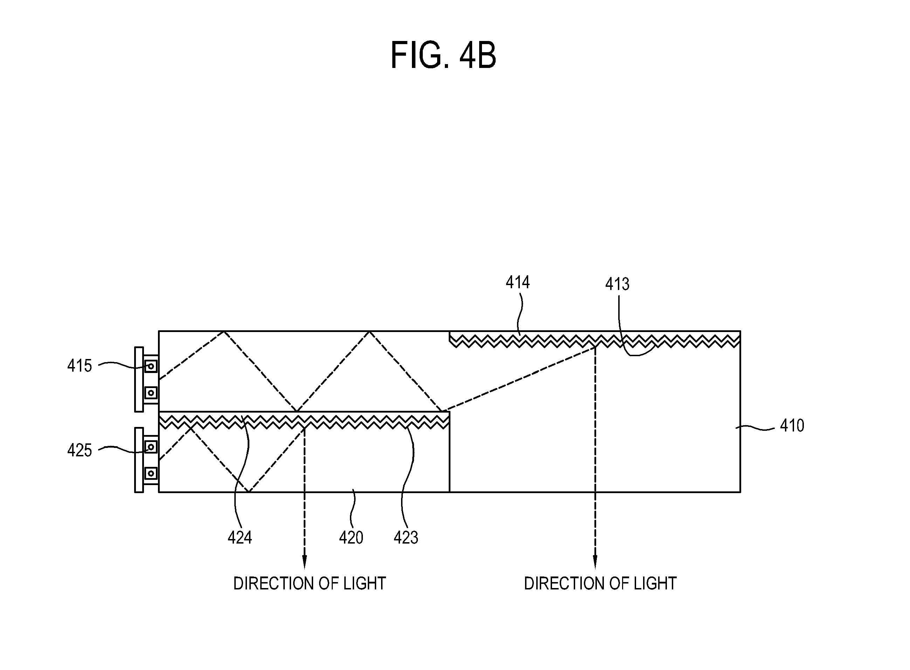

FIG. 4B is a plan view of a first light guiding plate and a second light guiding plate shown in FIG. 4A.

Specifically, FIG. 4B illustrates the first light guiding plate 410 and the second light guiding plate 420 as they would appear when looking down in the X direction illustrated in FIG. 4A.

The incident light from the first LED module 415 placed at a left side of the first light guiding plate 410 is totally reflected and travels in the first light guiding plate 410, and is then emerges from the first front surface 412a of the first light guiding plate 410 as being reflected from the reflective pattern 413 formed on the rear surface of the first light guiding plate 410. Similarly, the incident light from the second LED module 425 is totally reflected and travels in the second light guiding plate 420 and then emerges from the third front surface 422 of the second light guiding plate 420.

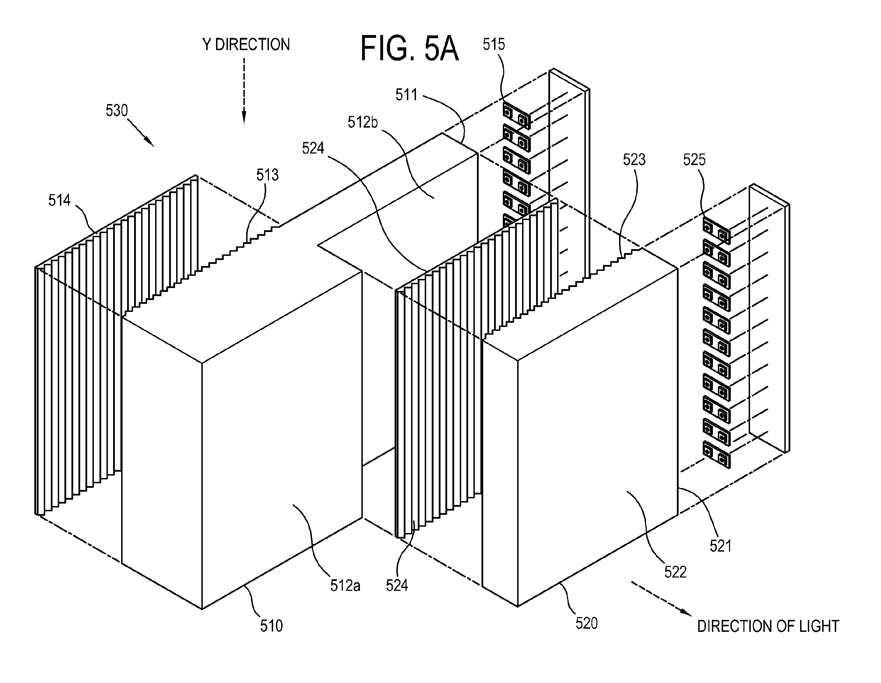

FIG. 5A is an exploded perspective view of a light guiding unit according to still another exemplary embodiment.

The light guiding unit 530 shown in FIG. 5A may include a first light guiding plate 510 and a second light guiding plate 520. The first light guiding plate 510 and the second light guiding plate 520 have a structure symmetrical to the first light guiding plate 410 and the second light guiding plate 420 shown in FIG. 4A. The first light guiding plate 510 may include a first lateral surface 511, a first front surface 512a and a second front surface 512b. The second light guiding plate 520 may include a second lateral surface 521 and a third front surface 522. Additionally, reflective patterns 513 and 523 of the first and second light guiding plates 510 and 520, reflective sheets 514 and 524, LED modules 515 and 525, and other structres shown in FIG. 5A are similar to those of FIG. 4A, and thus repetitive descriptions thereof will be avoided as necessary.

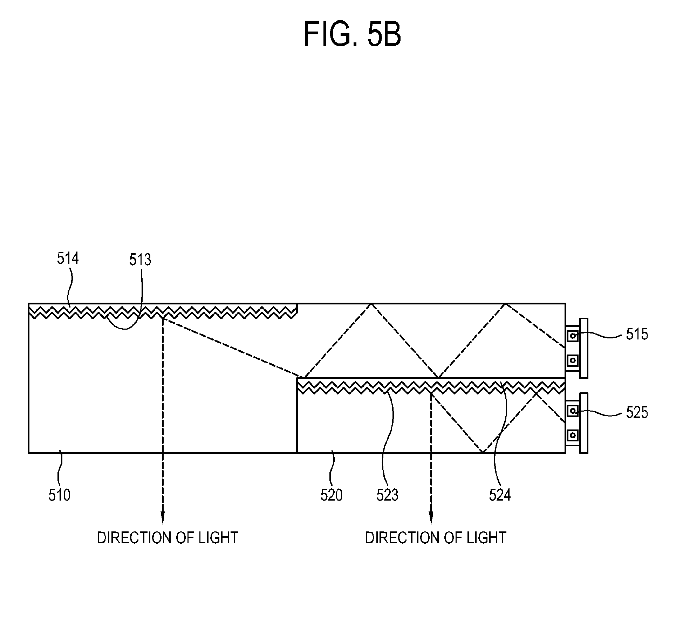

FIG. 5B is a plan view of a first light guiding plate and a second light guiding plate shown in FIG. 5A. Specifically, FIG. 5B illustrates the first light guiding plate 510 and the second light guiding plate 520 as they would appear when looking down in the Y direction illustrated in FIG. 5A. The configurations of the first light guiding plate 510 and the second light guiding plate 520 shown in FIG. 5B are similar to those shown in FIG. 4B, and thus repetitive descriptions thereof will be avoided as necessary.

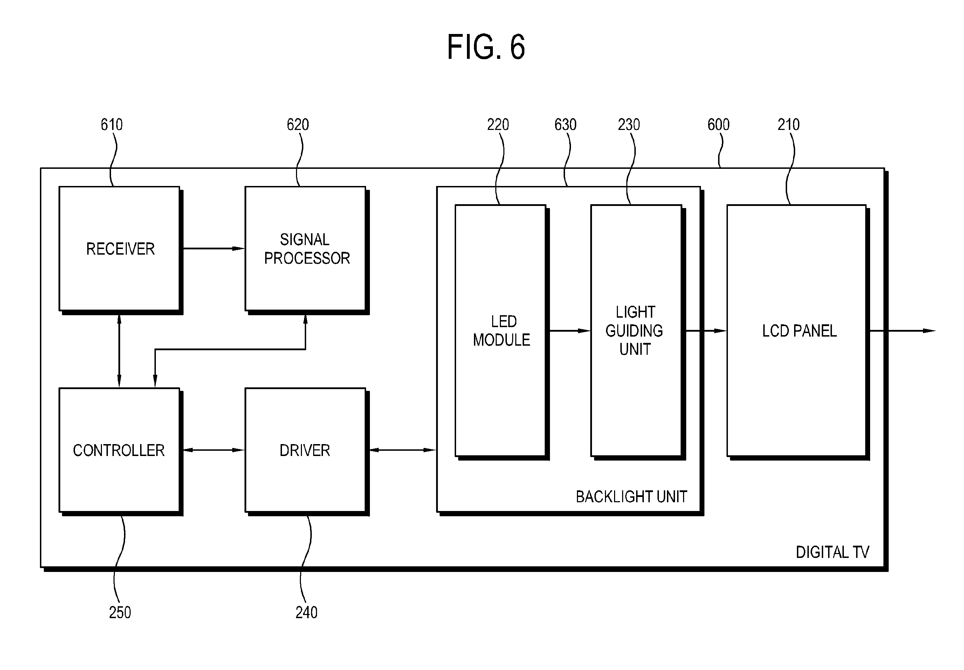

FIG. 6 shows that the display apparatus according to an exemplary embodiment is embodied in a digital television (TV).

In the case that a digital TV 600 is used as the display apparatus according to an exemplary embodiment, the digital TV 600 may include a receiver 610, a signal processor 620, a backlight unit 630, an LCD panel 210, a driver 240 and a controller 250.

The receiver 610 may receive a broadcasting signal. The signal processor 620 may process the received broadcasting signal to be displayed on the LCD panel 210.

The backlight unit 630 emits light to the LCD panel 210, and may include the plurality of LED modules 220 and the light guiding unit 230 as described with reference to FIGs. 2 to 5B.

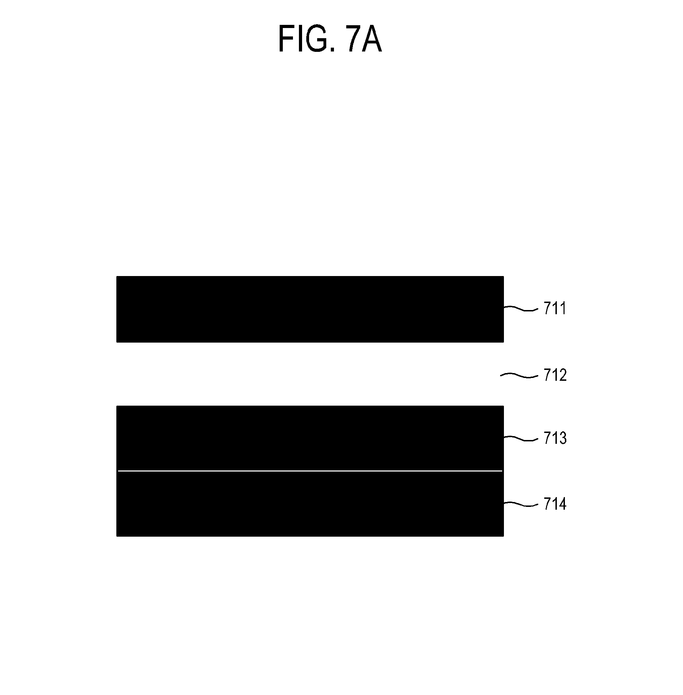

FIG. 7A shows local dimming performed for each line of the LCD panel 210.

As shown therein, the plurality of LED modules corresponding to lines 711 to 714 of the LCD panel 210 are selectively driven to emit light to only the second line 712. Thus, local dimming is possible with respect to each line of the LCD panel 210.

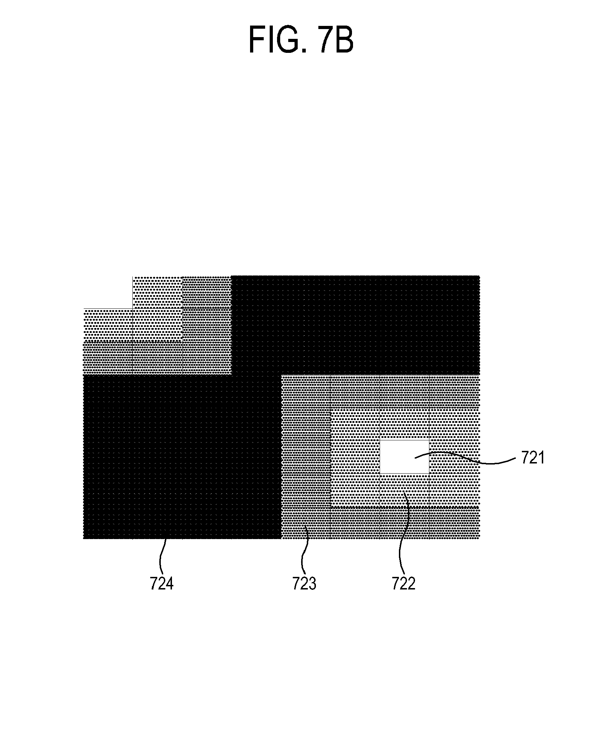

FIG. 7B shows local dimming performed for each block of LCD panel 210 through the light guiding unit according to an exemplary embodiment. This embodiment is based on the assumption that the backlight unit 630 including the LED module 220 and the light guiding unit 230 as described with reference to FIGs. 2 to 6 is employed, and the plurality of LED modules 220 are provided corresponding to the plurality of lines 711 to 714 of the LCD panel 210 as shown in FIG. 7A.

Referring to FIG. 7B, blocks 721, 722, 723 and 724 are different in brightness. Thus, such minute local dimming can be performed with respect to each block even though the edge-type LED is used.

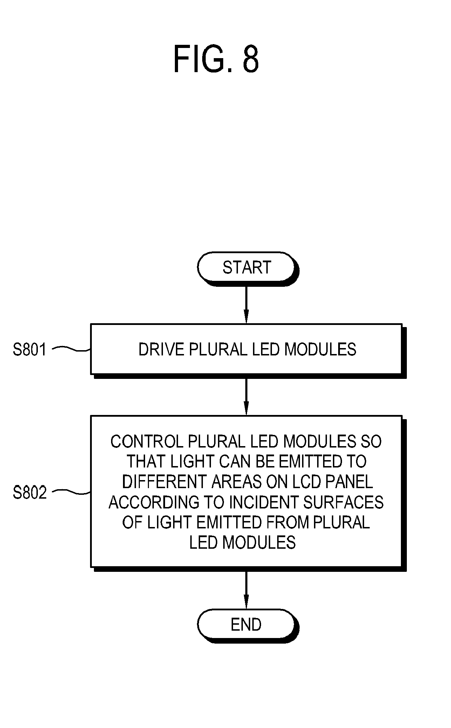

FIG. 8 is a flowchart of controlling a backlight unit according to an exemplary embodiment.

At operation S801, the backlight unit 630 drives the plurality of LED modules 220. Specifically, the backlight unit 630 can emit light corresponding to a plurality of areas of LCD panel 210.

At operation S802, the backlight unit 630 drives the plurality of LED modules 220 to emit light to different areas of LCD panel 210 according to incident surfaces of light from the plurality of LED modules 220. According to an exemplary embodiment, the backlight unit 630 may output different amounts of light to different areas of LCD panel 210. In other words, light may be selectively emitted to the first light guiding plate and the second light guiding plate, or the amount of incident light provided to the first light guiding plate and the second light guiding plate may be different from each other. Thus, the different areas of LCD panel 210 may be adjusted to have different brightnesses.

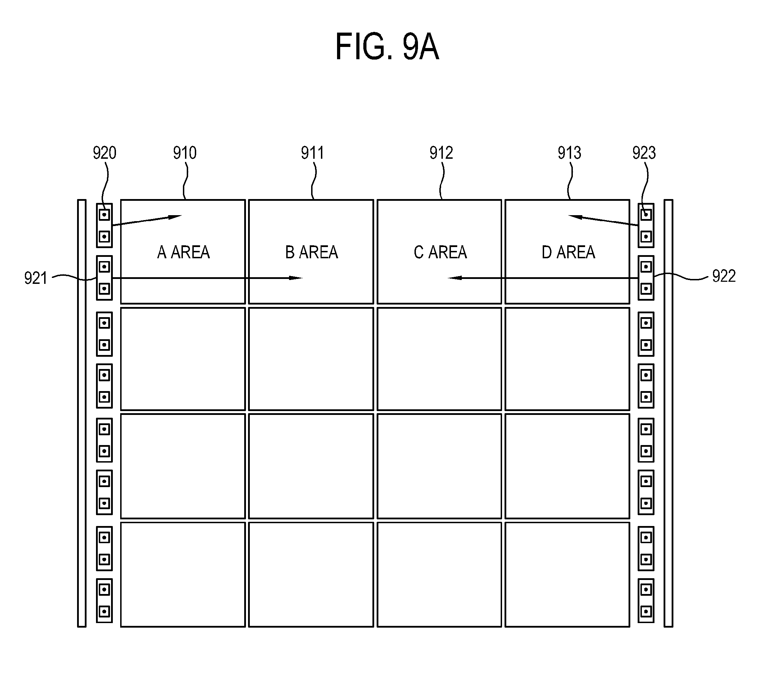

FIGs. 9A to 9C show schematic configurations of the display apparatus according to an exemplary embodiment.

According to this exemplary embodiment, the light guiding unit 230 and the plurality of LED modules 220 may be arranged in various configurations in the display apparatus 200. Thus, the local dimming of different areas of the LCD panel 210 can accomplished in various configurations. As illustrated in FIG. 9A, the light guiding unit 310 shown in FIG. 3A may be placed to correspond to an A area 910 and a B area 911, and the light guiding unit 320 shown in FIG. 3B may be placed to correspond to a C area 912 and a D area 913. Also, the first and second light guiding plates 410 and 420 shown in FIG. 4A may be placed to correspond to the A area 910 and the B area 911, respectively, and the first and second light guiding plates 510 and 520 may be placed to correspond to the C area 912 and the D area 913, respectively.

As illustrated in FIG. 9A, the LED module 920 placed at a left topmost position emits light via the A area 910 on the LCD panel 210. The LED module 921 placed at the left and second from the top emits light via the B area 911. The LED module 923 placed at a right topmost position emits light via the D area 913. The LED module 922 placed at the right second from the top emits light via the C area 912. Likewise, the other LED modules also emit light to different areas, respectively.

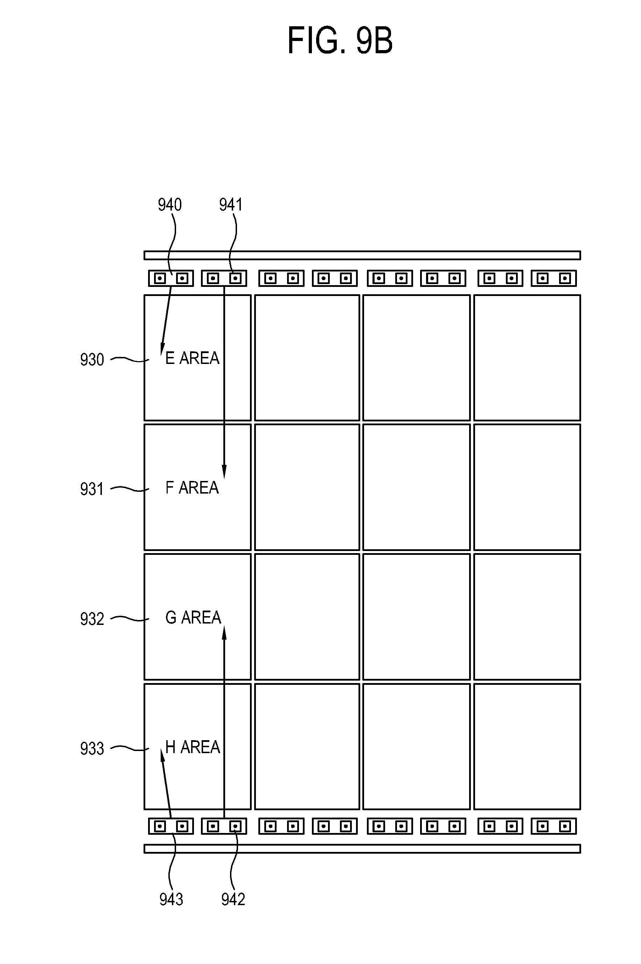

As illustrated in FIG. 9B, the light guiding unit 310 shown in FIG. 3A is placed corresponding to an H area 933 and a G area 932, and the light guiding unit 320 shown in FIG. 3B is placed corresponding to an E area 930 and an F area 931. Also, the first light guiding plate 410 and the second light guiding plate 420 shown in FIG. 4A are placed corresponding to the H area 933 and the G area 932, respectively, and the first light guiding plate 510 and the second light guiding plate 520 shown in FIG. 5A are placed corresponding to the E area 930 and the F area 931, respectively.

In this case, the LED module 940 placed at a top leftmost position emits light via the E area 930 on the LCD panel. The LED module 941 placed at a top second from the left position emits light via the F area 931. The LED module 943 placed at a bottom leftmost position emits light via the H area 933. The LED module 942 placed at a bottom second from the left position emits light via the G area 932. Likewise, the other LED modules also emit light to different areas, respectively.

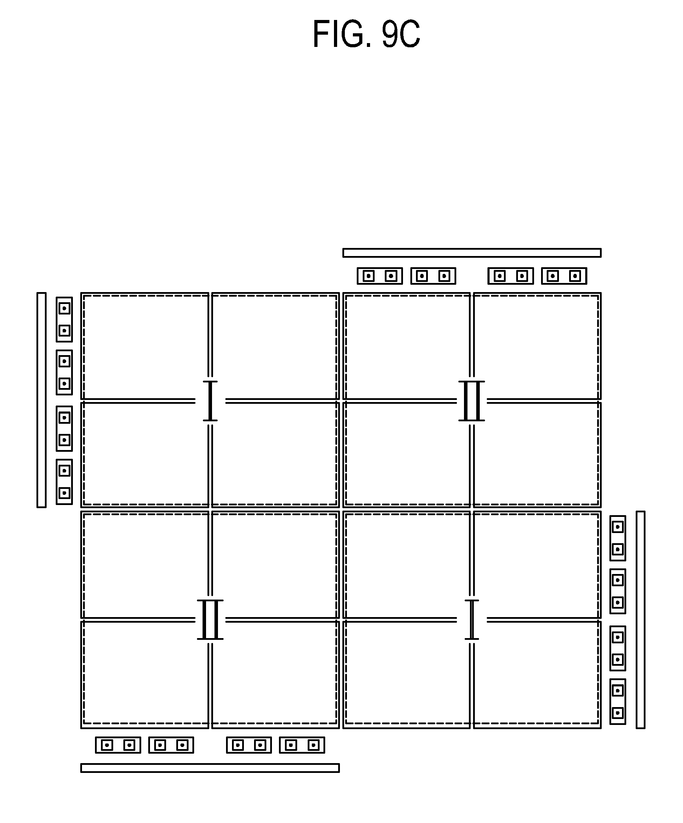

FIG. 9C shows a combination of the arrangements shown in FIGs. 9A and 9B.

An I area is similar to the case of FIG. 9A and as II area is similar to the case of FIG. 9B, and thus repetitive descriptions thereof will be avoided.

As described above, according to an exemplary embodiment, local dimming can be minutely performed according to blocks in the display apparatus using the edge-type LED. Furthermore, fewer LEDs are necessary to perform the local dimming, thereby minimizing power consumption and reducing costs.

Although a few exemplary embodiments have been shown and described, it will be appreciated by those skilled in the art that changes may be made in these embodiments without departing from the principles and spirit of the inventive concept, the scope of which is defined in the appended claims and their equivalents.

## Claims

1. A display apparatus comprising:
a display panel;
a plurality of light source modules;
a light guiding unit configured so that incident light from the plurality of light source modules is emitted to different areas of the display panel, respectively, wherein the plurality of light source modules are disposed at a lateral side of the light guiding unit;
a driver which drives the plurality of light source modules; and
a controller to control the driver so that the incident light from the plurality of light source modules is emitted to the different areas of the display panel.

2. The display apparatus according to claim 1, wherein the light guiding unit comprises a reflective pattern corresponding to an incident path of incident light so that the incident light from the plurality of light source modules can be emitted to the different areas of the display panel, respectively.

3. The display apparatus according to claim 1 or 2, wherein the plurality of light source modules comprises a plurality of light emitting diode (LED) modules, and
wherein the display panel comprises a liquid crystal display (LCD) panel.

4. The display apparatus according to claim 2 or 3, wherein the reflective pattern comprises a first reflective pattern corresponding to a first incident path of the incident light, and a second reflective pattern corresponding to a second incident path different from the first incident path, and
the first reflective pattern and the second reflective pattern are provided on different planes from each other.

5. The display apparatus according to claim 3 or 4, wherein the plurality of LED modules comprises a first LED module corresponding to the first reflective pattern, and a second LED module corresponding to the second reflective pattern.

6. The display apparatus according to claim 5, wherein the first LED module and the second LED module are arranged in two rows at the lateral side of the light guiding unit corresponding to positions of the first reflective pattern and the second reflective pattern.

7. The display apparatus according to claim 4, 5 or 6, wherein at least one of the first reflective pattern and the second reflective pattern is provided internally within the light guiding unit.

8. The display apparatus according to any of claims 4-7, wherein the light guiding unit comprises:
a first light guiding plate comprising the first reflective pattern; and
a second light guiding plate comprising the second reflective pattern.

9. The display apparatus according to claim 8, further comprising an intercepting layer which prevents light from passing between the first light guiding plate and the second light guiding plate.

10. The display apparatus according to claim 7, 8 or 9, wherein the first reflective pattern and the second reflective pattern are arranged not to overlap with each other in a longitudinal direction of the LCD panel.

11. A method of controlling a display apparatus with a liquid crystal display (LCD) panel, the method comprising:
receiving a video signal; and
controlling a plurality of light emitting diode (LED) modules provided at a lateral side of light guiding unit based on the received video signal so that incident light from the plurality of LED modules is emitted to different areas of the LCD panel via a reflective pattern corresponding to an incident path of the incident light.

12. The method according to claim 11, wherein the controlling comprises controlling the plurality of LED modules to emit different quantities of light according to the areas of the LCD panel.

13. The method of claim 11 or 12, wherein the display apparatus according to any of claims 1-10 is used.
